# EUROPÄISCHE PATENTSCHRIFT

(11) **EP 1 359 051 B1**
(45) Veröffentlichungstag und Bekanntmachung des Hinweises auf die Patenterteilung: **12.12.2007**
(21) Anmeldenummer: 03000112.7
(22) Anmeldetag: 02.01.2003
(51) Int. Cl.: B60N 2/20, B60N 2/225

(54) **Lehnengelenkbeschlag für einen Kraftfahrzeugsitz**
Backrest hinge fitting for a motor vehicle seat
Ferrure d'articulation de dossier pour un siège d'automobile

(30) Priorität: 29.04.2002 DE 10219199
(43) Veröffentlichungstag der Anmeldung: 05.11.2003
(73) Patentinhaber: C. Rob. Hammerstein GmbH & Co.KG, 42699 Solingen (DE)
(72) Erfinder: Becker, Burckhard, 42657 Solingen (DE); Beneker, Wilfried, 42799 Leichlingen (DE)
(74) Vertreter: Bauer, Wulf

(56) Entgegenhaltungen:
- DE-A1- 4 101 882
- FR-A- 2 795 689
- US-A- 5 209 637

## Beschreibung

Die Erfindung bezieht sich auf einen Lehnengelenkbeschlag für einen Kraftfahrzeugsitz nach dem Oberbegriff des Patentanspruchs 1. Ein derartiger Kraftfahrzeugsitz ist aus FR 2 795 689 A bekannt. Die Erfindung bezieht sich insbesondere auf einen Lehnengelenkbeschlag für einen vorverlagerbaren Fahrzeugsitz und ist insbesondere geeignet für Fahrzeuge mit Zugang zu einem Fondsitz durch eine einzige Fahrzeugtür pro Fahrzeugseite, also für sogenannte zweitürige Kraftfahrzeuge.

Der vorbekannte Fahrzeugsitz hat eine Lehne (Rückenlehne) und einen Sitzträger. Üblicherweise gehört zu einem derartigen Fahrzeugsitz auch noch ein Untergestell, das beispielsweise höhenverstellbar ist, und eine Längsverstelleinrichtung mit zwei Schienenpaaren. Bei dem Kraftfahrzeugsitz ist die Lehne über den Lehnengelenkbeschlag am Sitzträger festgelegt. Unter Sitzträger wird jegliche beliebige Struktur verstanden, die direkt oder indirekt ein Sitzkissen stützt.

Aus dem Stand der Technik ist ein Kraftfahrzeugsitz bekannt, bei dem zwischen den beiden Armen des Lehnengelenkbeschlages das einstellbare Gelenk, auch Rückenlehnengelenk genannt, vorgesehen ist. Der untere Arm des Lehnengelenkbeschlages ist nicht starr mit dem Sitzträger verbunden, vielmehr an einem Gelenkpunkt am Sitzträger angelenkt und über eine lösbare Verbindung, beispielsweise einen Haken, anderweitig am Sitzträger oder einem mit diesem verbundenen Teil gehalten. Wird die lösbare Verbindung freigegeben, kann die Lehne um den Gelenkpunkt nach vorn verschwenkt werden.

Bei dieser vorbekannten Ausführung ist das Vorklappgelenk selbst nicht dem Lehnengelenkbeschlag zugeordnet. Weiterhin ist nicht erreichbar, dass die Vorklappachse und die Gelenkachse zusammenfallen. Unter Vorklappachse wird die Achse verstanden, um die das Vorschwenken erfolgt. Die Gelenkachse ist die Achse des einstellbaren Gelenks, um diese Achse erfolgt die Lehnenverstellung in der Gebrauchsstellung.

Zum Stand der Technik wird auf US 5,352,019, DE 197 18 838 und DE 101 51 762 verwiesen.

Der Lehnengelenkbeschlag der eingangs genannten Art weist sowohl ein Vorklappgelenk als auch ein einstellbares Gelenk auf, Vorklappachse und Gelenkachse des einstellbaren Gelenks sind auf derselben Achslinie angeornet. Der Erfindung liegt die Aufgabe zugrunde, beide Funktionen in einem Bauteil und als Baueinheit zu verwirklichen und die Konstruktion zu vereinfachen.

Diese Aufgabe wird gelöst durch einen Lehnengelenkbeschlag mit den Merkmalen des Anspruchs 1.

Dieser Lehnengelenkbeschlag eignet sich sowohl für manuelle als auch motorische Verstellung und lässt sich auf geringeres Bewegungsspiel als die bekannten Vorrichtungen auslegen. Bei diesem Lehnengelenkbeschlag ist sowohl das Vorklappgelenk als auch das einstellbare Gelenk zwischen den beiden Armen angeordnet. Es ist nicht notwendig, separate Bauteile, beispielsweise für das Vorklappgelenk, am Kraftfahrzeugsitz vorzusehen. Durch die kombinierte Ausbildung in nur einem Beschlag vereinfachen sich Konstruktion, Montage, Lagerung usw..

Weiterhin ist im Unterschied zu vorbekannten Kraftfahrzeugsitzen das einstellbare Gelenk nicht mehr mechanisch parallel zum Vorklappgelenk, vielmehr sind beide hintereinander (seriell) angeordnet. Mechanisch macht sich dies dadurch bemerkbar, dass das einstellbare Gelenk nicht unmittelbar zwischen den beiden Armen, sondern zwischen einem Arm und dem Lagerteil angeordnet ist bzw. wirkt. Das Vorklappgelenk ist zwischen dem anderen Arm und dem Lagerteil ausgebildet.

In einer bevorzugten Weiterbildung ist die Lagerbohrung mit relativ grossem Durchmesser ausgeführt, entsprechend ist auch das Lagerteil ausgebildet. Dadurch lässt sich das Lagerspiel im Vorklappgelenk reduzieren. Weiterhin wird eine kompakte Bauweise ermöglicht, weil das einstellbare Gelenk innerhalb des Lagerteils untergebracht werden kann, das Lagerteil also beispielsweise als Ring ausgebildet werden kann. Unter großem Durchmesser wird ein Durchmesser von z.B. 6 bis 12 cm, insbesondere 10 cm verstanden.

In einer besonders bevorzugten Weiterbildung fallen die Vorklappachse, um die das Vorklappen erfolgt, und die Gelenkachse des einstellbaren Gelenks zusammen. Dies ermöglicht eine weitere Verringerung des Lagerspiels. Weiterhin kann die Lehne so ausgelegt werden, dass nur ihre Bewegung um die eine gemeinsame Achse berücksichtigt werden muss, nicht aber um zwei unterschiedliche, gegeneinander versetzte Achsen.

Die Lagerbohrung ist vorzugsweise im oberen Arm ausgebildet. Dadurch kann auch die Sperreinrichtung dem oberen Arm zugeordnet werden, was wiederum eine günstige mechanische Verbindung zwischen Freigabemittel und einem Freigabehebel zulässt. Diese mechanische Verbindung muss nun nicht mehr über ein Gelenk geführt werden, vielmehr bleibt sie innerhalb der Lehne.

In einer besonders bevorzugten Weiterbildung sind die beiden Arme und das Lagerteil flache Blechteile. Dadurch lässt sich das Innengelenk flach, leichtgewichtig und aus preisgünstig sowie sehr präzise herstellbaren Bauteilen aufbauen. Bevorzugt besteht der untere Arm aus zwei flachen Teilarmen, die zwischen sich den oberen Arm aufnehmen und damit ein Teil des Gehäuses übernehmen, das den Lehnengelenkbeschlag nach aussen abschließt.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung näher erläutert wird. In dieser Zeichnung zeigen:
Figur 1: Eine prinzipielle Seitenansicht eines Kraftfahrzeugsitzes mit offen dargestelltem Lehnengelenkbeschlag zwischen einer Lehne und einem Sitzträger, die Lehne ist in der vorgeklappten Stellung,
Figur 2: eine Darstellung des Kraftfahrzeugsitzes gemäss Figur 1, jedoch ist nunmehr die Lehne in der normalen Gebrauchsstellung und
Figur 3: ein perspektivisches Montagebild eines Lehnengelenkbeschlages, wie er in den Figuren 1 und 2 dargestellt ist.

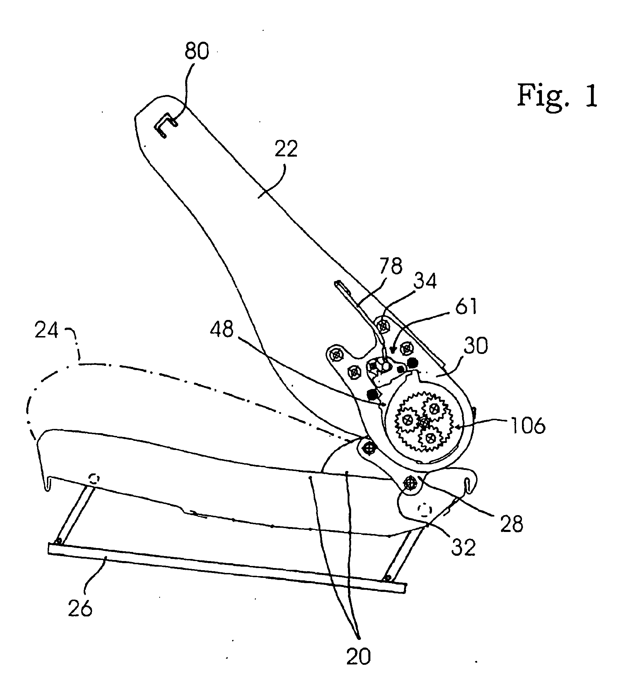

Figur 1 zeigt einen Kraftfahrzeugsitz, der mit dem Lehnengelenkbeschlag ausgerüstet ist. Der Kraftfahrzeugsitz hat einen Sitzträger 20 und eine Lehne 22. Zwischen beiden ist der Lehnengelenkbeschlag angeordnet.

Der Sitzträger 20 ist hier nur angedeutet, er trägt direkt oder indirekt einen Polsterkörper 24 und ist über vordere und hintere Parallelogrammarme mit einer Längsverstelleinheit 26 gelenkverbunden, die aus zwei Schienenpaaren besteht. Dies alles ist Stand der Technik und muss hier nicht näher erläutert werden.

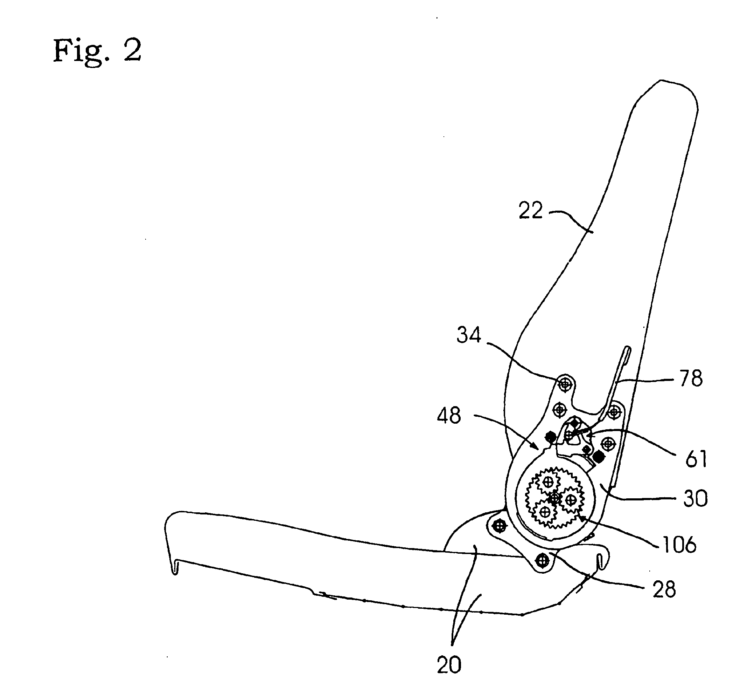

Wie die Figuren zeigen, hat der Lehnengelenkbeschlag einen am Sitzträger 22 starr befestigbaren unteren Arm 28 und einen an der Lehne 22 starr befestigbaren oberen Arm 30. Durch die Beschreibung der Verbindung zwischen unterem Arm 28 und Sitzträger 20 als "starr" soll der Unterschied zum Stand der Technik deutlich zum Ausdruck gebracht werden. Wie die Figuren 1 und 2 zeigen, ist der untere Arm 28 in zwei Befestigungspunkten 32 mit dem Sitzträger 20 verbunden. Diese Befestigungen sind permanent, können also nicht wie beim Stand der Technik gelöst werden. Entsprechendes gilt für die Verbindungen zwischen dem oberen Arm 30 und einer hier nicht näher dargestellten Tragstruktur der Lehne 22. Insoweit besteht aber hier kein Unterschied zum Stand der Technik, weil bereits beim Stand der Technik die Verbindung zwischen oberem Arm 30 und Traggerüst der Lehne 22 starr ist. Die Befestigung erfolgt in vier Befestigungspunkten 34.

In der konkreten Ausführung besteht der untere Arm aus zwei Teilarmen 281 (vorderer Teilarm) und 282 (hinterer Teilarm). Beide Teilarme sind baugleich. Sie sind wie der obere Arm 30 aus Flachmaterial, insbesondere Stahlblech, hergestellt. Bei montiertem Lehnengelenkbeschlag befindet sich der obere Arm 30 zwischen den beiden Teilarmen 281 und 282 und in Kontakt mit diesen.

Es ist nicht notwendig, den unteren Arm durch zwei Teilarme auszubilden, vielmehr ist ein einziger Unterarm in anderen Ausführungsbeispielen durchaus möglich.

Für die Befestigungspunkte 32 sind in den beiden Teilarmen 281, 282 Bohrungen 42 vorgesehen, die beiden Teilarme 281, 282 werden über Distanzhülsen auf Abstand gehalten. Für die vier oberen Befestigungspunkte 34 sind im oberen Arm 30 insgesamt vier Bohrungen 44 vorgesehen.

Der obere Arm 30 hat eine Lagerbohrung 50. Es handelt sich dabei um eine kreisrunde Ausnehmung mit einem Innendurchmesser von mehreren Zentimetern, beispielsweise 5 bis 12, insbesondere 9 bis 11 cm. Die Lagerbohrung 50 geht nach oben, also zu den Bohrungen 44 hin, über in eine Sperrbucht 52, die eine komplizierte Form aufweist und auf die noch im einzelnen eingegangen wird. Diametral der Sperrbucht 52 gegenüberliegend ist eine Anschlagbucht 54 vorgesehen, die ebenfalls in die Lagerbohrung 50 mündet.

### In folgendem wird das Vorklappgelenk 48 beschrieben:

Innerhalb der Lagerbohrung ist ein Lagerteil 60 schwenkbar gelagert. Es liegt mit seinem zylindrischen Aussemantel möglichst spielfrei an der Innenwandung der Lagerbohrung 50 an. Das Lagerteil 60 ist innerhalb der Lagerbohrung 50 nur über einen begrenzten Schwenkwinkel drehbar, nämlich dem gewünschten Schwenkhebel der Vorklappbewegung. Die Begrenzung wird durch Anschläge erreicht, auf die im folgenden eingegangen wird.

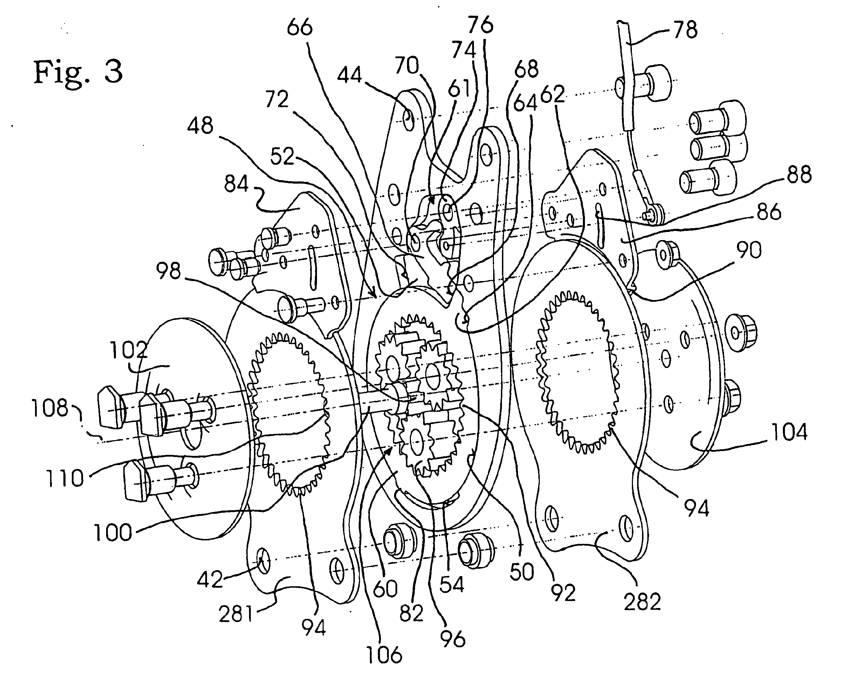

Vom Lagerteil 60 springt nach oben eine Sperrnase 62 vor, die radial gegenüber dem ideal zylindrischen Aussenmantel des Lagerteils 60 wegsteht. Sie greift in die Sperrbucht 52 ein. In der in Figur 3 gezeigten Position befindet sich die Sperrnase 62 in spielfreier Anlage an einer Sperrflanke 64 der Sperrbucht 52. Die Sperrnase 62 hat im wesentlichen zwei Stufen mit gerundeten Kanten, entsprechend ist auch die Sperrflanke 64 ausgeführt. Durch diese Anlage der Sperrnase 62 an der Sperrflanke 64 ist eine Drehbewegung des Lagerteils 60 im Uhrzeigersinn (siehe Figur 3) blockiert. In den Figuren 1 und 2 ist die Sperrrichtung genau im anderen Drehsinn.

In der Darstellung gemäss Figur 3 wird eine Drehbewegung des Lagerteils 60 gegen den Uhrzeigersinn und innerhalb der Lagerbohrung 50 dadurch unterbunden, dass ein doppelarmiges Sperrteil 66 mit einer Endfläche eines unteren Sperrarms an einer Blockierfläche 68 der Sperrnase 62 anliegt, diese Blockierfläche 68 weist in Gegenrichtung zur Sperrflanke 64.

Blockierflanke 68 und Endfläche des Sperrteils 66 schneiden sich in sehr kleinem Winkel und im Bereich der Selbsthemmung. Das Sperrteil 66 wird soweit in Richtung des Uhrzeigersinnes um seine Sperrteilachse 70 durch ein geeignetes, elastisches Mittel (nicht eingezeichnet, ansich bekannt) gedreht, dass eine spielfreie Blockierung erfolgt. Eine Gerade durch die Sperrteilachse 70 und den Berührungsbereich zwischen Blockierfläche 68 der Sperrnase 62 und freiem Ende des unteren Armes von 66 verläuft im wesentlichen rechtwinklig zu einer Durchmesserlinie durch die Blockierfläche 68 im Blockierzustand. Die Abweichung vom rechten Winkel liegt im Bereich der Selbsthemmung.

Der Sperrflanke 60 gegenüberliegend befindet sich eine Anschlagflanke 72 der Sperrbucht 52. An diese schlägt die Blockierfläche 68 an, wenn das Sperrteil 66 weggeschwenkt ist und somit die Blockierung aufgehoben ist.

Das Sperrteil 66 befindet sich vollständig innerhalb der Sperrbucht 52. Dies gilt auch für einen Lösehebel 74, der um eine Lösehebelachse 76 verschwenkbar ist. Figur 3 zeigt die Ruhestellung des Lösehebels 74. In diese ist er elastisch vorbelastet. Wird der Lösehebel 74 in Uhrzeigerrichtung verschwenkt, kommt er in Anschlag an einen zweiten, kurzen Arm des zweiarmigen Sperrteils 66. Dieses wird dadurch gegen den Uhrzeigersinn verschwenkt. Dadurch kann das freie Ende des längeren Arms des Sperrteils 66 von der Blockierfläche 68 wegschwenken.

Am Lösehebel 74 greift ein Bowdenzug 78 an, der an seinem anderen Ende mit einem Hebel 80, welcher im oberen Bereich der Lehne 22 in ansich bekannter Weise vorgesehen ist, verbunden ist. Der Bowdenzug 78 kann auch ein einfacher Seilzug sein. Die Teile 62 bis 80 bilden eine Sperreinrichtung 61. Von dieser bilden die Teile 72 bis 80 eine Freigabeeinrichtung dieser Sperreinrichtung 61. Der Lösehebel 74 hat die Funktion eines Freigabemittels, er wird daher auch als Freigabemittel bezeichnet.

In die Anschlagbucht 54 springt ein Anschlagteil82 radial vom Lagerteil 60 vor. Es bildet zusätzliche Anschläge. So ist in der in Figur 3 gezeigten Sperrstellung die linke radiale Flanke des Anschlagteils 82 im Anschlag am linken Ende der Anschlagbucht 54. Wenn das Lagerteil 60 nach Freigabe der Sperreinrichtung gedreht wurde und die Blockierfläche 68 an der Anschlagflanke 72 anliegt, ist die andere radiale Flanke des Anschlagteils 82 in Anschlag am anderen Ende der Anschlagbucht 54.

Beidseitig des oberen Arms 30 und im wesentlichen im Bereich um die Sperrbucht 52 herum decken zwei Gehäuseteile 86, die im wesentlichen spiegelbildlich baugleich ausgeführt sind, seitlich ab, sie überdecken im wesentlichen die Sperrbucht 52 und die Hebel 66 und 74. In ihnen sind die Sperrteilachse 70 und die Lösehebeachse 76 positioniert. Weiterhin bilden sie ein gekrümmtes Langloch 88 aus, das die Bewegung des Angriffspunktes des Bowdenzuges 78 am Lösehebel 74 führt. Schliesslich haben die beiden Gehäuseteile 86, einen auf einem Kreisbogen liegenden Führungsrand 90, mit dem sie jeweils einen Teilarm 281 bzw. 282 übergreifen und so halten, dass er relativ zu ihnen gedreht werden kann.

Das Lagerteil 60 ist im wesentlichen als ein Ring ausgeführt. Es hat am Innenmantel eine Verzahnung 92. Eine entsprechende Innenverzahnung 94, jedoch mit einer um drei unterschiedlichen Zahnzahl, haben die beiden baugleichen Teilarme 281, 282. Mit diesen Verzahnungen 92, 94 sind drei Planetenräder 96 im Eingriff, die Planetenräder 96 sind gleich verteilt angeordnet. Sie sind ihrerseits im Eingriff mit einem Ritzel 98, das mit einer Welle 100 verbunden ist. Die Achse dieser Welle verläuft durch den Mittelpunkt der Lagerbohrung 50 und den Mittelpunkt der Verzahnung 92, sowie rechtwinklig zur Ebene, in der sich das flache Blechteil oberer Arm 30 befindet.

Zwei im wesentlichen baugleiche runde Abdeckscheiben 102, 104 decken das Getriebe und die Verzahnungen 92, 94 nach aussen hin ab. Durch mindestens eine Abdeckscheibe, in Figur 3 ist es die linke Abdeckscheibe, ragt im zusammengebautem Zustand die Welle 100 nach aussen zugänglich vor. An dieser Welle ist ein Verbindungsmittel 110 vorgesehen und kann ein Handrad (nicht dargestellt) angesetzt werden, mit dem der Planetentrieb antreibbar ist. Anstelle des Handrades kann auch ein Elektromotor eingesetzt werden.

Die Teile 92 bis 100 bilden ein einstellbares Gelenk 106 zur Winkelverstellung der Lehne 22 in ihrer Gebrauchsstellung.

Wie insbesondere aus Figur 3 ersichtlich ist, sind Vorklappgelenk 48 und einstellbares Gelenk 106 mechanisch in Serie angeordnet. Die Sperreinrichtung 61 sperrt die Schwenkbewegung des Lagerteils 60 in der Lagerbohrung 50. Ein Vorschwenken erfolgt durch Relativbewegung zwischen oberem Arm 30 und Lagerteil 60. Das einstellbare Gelenk wiederum befindet sich zwischen Lagerteil 60 und dem unteren Arm 28.

Diese serielle Anordnung und die konkret gewählte Konstruktion haben die Eigenart, dass der Vorschwenkwinkel, um den das Vorklappen der Lehne 22 erfolgt, unabhängig ist von der aktuellen Winkelposition der Lehne 22 in der Gebrauchsstellung. Egal ob die Lehne mittels des einstellbaren Gelenks 106 innerhalb des Nutzwinkelbereiches der Lehne mehr nach vorn oder mehr nach hinten gestellt wurde, erfolgt das Vorklappen immer um einen festen Vorklappwinkel.

Möchte man erreichen, dass der Winkel, den die Lehne in Vorklappstellung (Figur 1) einnimmt, immer derselbe ist und unabhängig ist vom Ausgangspunkt, also von der aktuellen Einstellung des einstellbaren Gelenks 106, so kann vom unteren Arm 28 ein Anschlag in den Bewegungsbereich der Sperrnase und/oder des Anschlagteils 82 springen oder umgekehrt die Sperrnase 62 oder ein entsprechendes Bauteil und/oder das Anschlagteil 82 oder ein entsprechendes Bauteil in den Bewegungsbereich des unteren Arms 28 reichen, beispielsweise in ein Langloch. Diese Anordnung hat die Aufgabe, die Vorklappbewegung nach vorn zu begrenzen.

Es ist auch möglich, die Lagerbohrung 50 im unteren Arm 28 vorzusehen. Dann aber entfällt der Vorteil, dass die Sperreinrichtung der Lehne 22 zugeordnet ist.

Im beschriebenen Ausführungsbeispiel fallen die Vorklappachse und die Achse, um die das einstellbare Gelenk 106 die Lehne 22 verstellt, zusammen, liegen also auf derselben Achslinie 108. Dies ist nicht unbedingt notwendig. Es sind auch Konstruktionen denkbar, bei denen beispielsweise die Verzahnung 92 einen anderen Mittelpunkt hat als der Außenmantel des Lagerteils 60.

Weiterhin können in einer anderen Ausführung die Bauteile nicht konzentrisch oder von innen nach aussen aufgebaut sein, vielmehr können sie auch seitlich versetzt sein. Das einstellbare Gelenk 106 muss nicht, wie im Ausführungsbeispiel, im wesentlichen innerhalb der Lagerbohrung 50 untergebracht sein, obwohl diese Anordnung Vorteile bietet.

### Bezugszeichenliste

- 20: Sitzträger
- 22: Lehne
- 24: Polsterkörper
- 26: Längsverstelleinheit
- 28: unterer Arm
281 vorderer Arm
282 hinterer Teilarm
- 30: oberer Arm
- 32: Befestigungspunkt (unterer Arm)
- 34: Befestigungspunkt (oberer Arm)
- 42: Bohrung für Befestigungspunkt 32.
- 44: Bohrung für Befestigungspunkt 34
- 48: Vorklappgelenk
- 50: Lagerbohrung
- 52: Sperrbucht
- 54: Anschlagbucht
- 60: Lagerteil
- 61: Sperreinrichtung
- 62: Sperrnase
- 64: Sperrflanke (der Sperrbucht)
- 66: Sperrteil
- 68: Blockierfläche
- 70: Sperrteilachse
- 72: Anschlagsflanke
- 74: Lösehebel
- 76: Lösehebelachse
- 78: Bowdenzug
- 80: Hebel
- 82: Anschlagteil
- 86: Gehäuseteil
- 88: Langloch
- 90: Führungsrand
- 92: Verzahnung
- 94: Innenverzahnung
- 96: Planetenräder
- 98: Ritzel
- 100: Welle
- 102, 104: Abdeckscheibe
- 106: einstellbares Gelenk
- 108: Achslinie
- 110: Verbindungsmittel

## Patentansprüche

1. Lehnengelenkbeschlag für einen Kraftfahrzeugsitz, der einen Sitzträger (20) und eine Lehne (22) aufweist, insbesondere Lehnengelenkbeschlag für Kraftfahrzeuge mit nur einer Tür pro Fahrzeugseite, der Lehnengelenkbeschlag weist auf
a) einen am Sitzträger (20) starr befestigbaren unteren Arm (28),
b) einen an der Lehne (22) starr befestigbaren oberen Arm(30),
c) ein Vorklappgelenk (48) zum raschen Vorklappen der Lehne (22) aus einer Gebrauchsstellung in eine Vorklappstellung, das eine Lagerbohrung (50) in einem der beiden Arme (28, 30), ein in dieser Lagerbohrung (50) schwenkbar angeordnetes Lagerteil (60) und eine Sperreinrichtung (61) aufweist, die eine Schwenkbewegung des Lagerteils (60) in der Lagerbohrung (50) normalerweise sperrt und der ein Freigabemittel zugeordnet ist, das bei Betätigung die Sperreinrichtung (61) freigibt, wenn ein Vorklappen in die Vorklappstellung erfolgen soll und
d) mit einem zwischen dem Lagerteil (60) und dem anderen Arm (30, 28) angeordneten, einstellbaren Gelenk (106) zur Winkelverstellung der Lehne (22) gegenüber dem Sitzträger (20) in der Gebrauchsstellung der Lehne (22) und innerhalb eines Nutzwinkelbereichs der Lehne (22),
wobei der eine Arm (28,30) eine Sperrbucht (52) aufweist, die mit der Lagerbohrung (50) verbunden ist und in der sich ein Sperrteil (66) befindet, A **dadurch gekennzeichnet, dass** das Lagerteil (60) eine radial hervorspringende Sperrnase (62) aufweist, die in die Sperrbucht (52) eingreift.

2. Lehnengelenkbeschlag nach Anspruch 1, **dadurch gekennzeichnet, dass** die Lagerbohrung (50) im oberen Arm (30) ausgebildet ist.

3. Lehnengelenkbeschlag nach Anspruch 1, **dadurch gekennzeichnet, dass** das Lagerteil (60) in der Lagerbohrung (50) des einen Arms (28, 30) um eine Vorklappachse verschwenkbar angeordnet ist und dass das einstellbare Gelenk (106) um eine Gelenkachse einstellbar ist, die mit der Vorklappachse zusammenfällt.

4. Lehnengelenkbeschlag nach Anspruch 1, **dadurch gekennzeichnet, dass** die Lagerbohrung (50) einen größeren Durchmesser hat als das einstellbare Gelenk (106), und dass sich das einstellbare Gelenk (106) innerhalb eines durch die Lagerbohrung (50) definierten Zylinders befindet, insbesondere zumindest teilweise innerhalb der Lagerbohrung (50) angeordnet ist.

5. Lehnengelenkbeschlag nach Anspruch 1, **dadurch gekennzeichnet, dass** das Lagerteil (60) ein Ring, insbesondere eine Ringscheibe, ist, der an seinem Außenmantel an der Lagerbohrung (50) anliegt und der an seinem Innenmantel einen Teilbereich des einstellbaren Gelenks (106), insbesondere eine Innenverzahnung (94), ausbildet.

6. Lehnengelenkbeschlag nach Anspruch 1, **dadurch gekennzeichnet, dass** der eine Arm (28, 30) eine Anschlagflanke (72) aufweist und dass diese Anschlagflanke (72) und die Sperrnase (62) die Vorklappbewegung der Lehne (22) in die Vorklappstellung begrenzen.

7. Lehnengelenkbeschlag nach Anspruch 1, **dadurch gekennzeichnet, dass** sich in der Sperrbucht (52) auch ein Lösehebel (74) der Sperreinrichtung (61) befindet.

8. Lehnengelenkbeschlag nach Anspruch 1, **dadurch gekennzeichnet, dass** die beiden Arme (28, 30) und das Lagerteil (60) flache Blechteile sind, insbesondere dass der untere Arm (28) aus zwei flachen Teilarmen (281, 282) besteht, die zwischen sich den oberen Arm (30) aufnehmen.

9. Lehnengelenkbeschlag nach Anspruch 1, **dadurch gekennzeichnet, dass** das einstellbare Gelenk (106) eine Antriebswelle und ein Getriebe aufweist und dass die Antriebswelle ein Verbindungsmittel (110) hat für eine Verbindung mit einem Motor oder einem Handbetätigungsmittel, z. B. Handrad, Handhebel.

10. Lehnengelenkbeschlag nach Anspruch 1, **dadurch gekennzeichnet, dass** das einstellbare Gelenk (106) auf nur eine Sitzseite und die Sperreinrichtung (61) des Vorklappgelenks (48) nur auf der anderen Sitzseite des Kraftfahrzeugsitzes angeordnet sind, dass die Schwenkachse des einstellbaren Gelenks (106) mit der Vorklappachse des Vorklappgelenks (48) zusammenfällt und dass eine starre Drehverbindung vorgesehen ist, die zwischen den beiden Gelenken (106) der beiden Sitzseiten angeordnet ist.

## Claims

1. A backrest hinged mountings for a motor vehicle seat comprising a seat carrier (20) and a backrest (22), more specifically a backrest hinged mountings for motor vehicle seats having only one door on either side of the vehicle, said backrest hinged mountings comprising
a) a lower arm (28) adapted to be fixedly fastened to said seat carrier (20),
b) an upper arm (30) adapted to be fixedly fastened to said backrest (22),
c) a fold forward hinge (48) for quickly folding said backrest (22) forward from a position of utilization into a forward folded position, said hinge comprising a bearing hole (50) in one of said two arms (28, 30), a bearing part (60) pivotally disposed in said bearing hole (50) and a stopper device (61) that normally stops a pivotal movement of said bearing part (60) in said bearing hole (50) and that is allocated a release means that releases said stopper device (61) upon actuation if it is intended to fold the backrest forward into the forward folded position and
d) with an adjustable hinge (106) interposed between said bearing part (60) and the other arm (30, 28) for angular adjustment of said backrest (22) with respect to said seat carrier (20) in the position of utilization of said backrest (22) and within a useful angular range of said backrest (22), the one arm (28, 30) comprising a stopper bight (52) that is connected to said bearing hole (50) and accommodates a stopper part (66),
**characterized in that** said bearing part (60) comprises a radially protruding stopper nose (62) that engages into said stopper bight (52).

2. The backrest hinged mountings as set forth in claim 1, **characterized in that** the bearing hole (50) is configured in the upper arm (30).

3. The backrest hinged mountings as set forth in claim 1, **characterized in that** the bearing part (60) is disposed in the bearing hole (50) of the one arm (28, 30) for pivotal movement about a forward fold axis and that the adjustable hinge (106) is adjustable about a hinge axis that coincides with said forward fold axis.

4. The backrest hinged mountings as set forth in claim 1, **characterized in that** the bearing hole (50) has a diameter that is greater than the adjustable hinge (106) and that said adjustable hinge (106) is located inside a cylinder defined by said bearing hole (50) and is more specifically disposed at least partially inside said bearing hole (50).

5. The backrest hinged mountings as set forth in claim 1, **characterized in that** the bearing part (60) is a ring, more specifically a washer, that fits with its outer surface against the bearing hole (50) and that forms on its inner surface a portion of the adjustable hinge (106), more specifically an inner toothed surface feature (94).

6. The backrest hinged mountings as set forth in claim 1, **characterized in that** the one arm (28, 30) comprises an abutment face (72) and that this abutment face (72) and the stopper nose (62) limit the forward fold movement of the backrest (22) into the forward fold position.

7. The backrest hinged mountings as set forth in claim 1, **characterized in that** a disengagement lever (74) for disengaging the stopper device (61) is also located in the stopper bight (52).

8. The backrest hinged mountings as set forth in claim 1, **characterized in that** the two arms (28, 30) and the bearing part (60) are flat steel sheet parts, more specifically that the lower arm (28) consists of two flat arm portions (281, 282) that receive between them the upper arm (30).

9. The backrest hinged mountings as set forth in claim 1, **characterized in that** the adjustable hinge (106) comprises a drive shaft and a gear and that said drive shaft has a connection means (110) for a connection with a motor or a manual actuation means such as a hand wheel, hand lever.

10. The backrest hinged mountings as set forth in claim 1, **characterized in that** the adjustable hinge (106) is disposed on only one seat side and that the stopper device (61) of the forward fold hinge (48) is disposed on only the other seat side of the motor vehicle seat, that the pivot axis of the adjustable hinge (106) coincides with the forward fold axis of the forward fold hinge (48) and that there is provided a fixed rotational connection that is interposed between the two hinges (106) of the two seat sides.

## Revendications

1. Monture d'articulation d'un dossier de siège de véhicule automobile comportant un support de siège (20) et un dossier (22), notamment monture d'articulation d'un dossier de siège de véhicule automobile n'ayant qu'une porte par côté, la monture d'articulation du dossier comportant
a) un bras inférieur (28) apte à être fixé de façon rigide au support de siège (20),
b) un bras supérieur (30) apte à être fixé de façon rigide au dossier (22),
c) une articulation de basculement vers l'avant (48) pour le basculement rapide du dossier (22) vers l'avant depuis une position d'utilisation vers une position basculée vers l'avant qui comporte un trou de montage (50) dans un des deux bras (28, 30), une pièce de montage (60) montée pivotante dans ce trou de montage (50) et un mécanisme d'arrêt (61) qui normalement arrête un mouvement pivotant de la pièce de montage (60) dans le trou de montage (50) et auquel est associé un moyen de libération qui libère le mécanisme d'arrêt (61) lorsqu'il est actionné pour faire basculer le dossier vers l'avant dans la position basculée vers l'avant et
d) avec une articulation (106) réglable disposée entre la pièce de montage (60) et l'autre bras (30, 28) pour le réglage angulaire du dossier (22) par rapport au support de siège (20) dans la position d'utilisation du dossier (22) et au sein d'un secteur angulaire utile du dossier (22),
l'un des bras (28, 30) comportant une découpe d'arrêt (52) qui est reliée au trou de montage (50) et dans laquelle se trouve une pièce d'arrêt (66), **caractérisée en ce que** la pièce de montage (60) comporte un ergot d'arrêt (62) s'étendant radialement en saillie et s'engageant dans la découpe d'arrêt (52).

2. Monture d'articulation d'un dossier selon la revendication 1, **caractérisée en ce que** le trou de montage (50) est formé dans le bras supérieur (30).

3. Monture d'articulation d'un dossier selon la revendication 1, **caractérisée en ce que** la pièce de montage (60) est montée pivotante autour d'un axe de basculement vers l'avant dans le trou de montage (50) de l'un des bras (28, 30) et que l'articulation réglable (106) est réglable autour d'un axe de l'articulation qui coïncide avec l'axe de basculement vers l'avant.

4. Monture d'articulation d'un dossier selon la revendication 1, **caractérisée en ce que** le trou de montage (50) a un diamètre supérieur à celui de l'articulation réglable (106) et que l'articulation réglable (106) se situe à l'intérieur d'un cylindre défini par le trou de montage (50), notamment est disposé du moins en partie à l'intérieur du trou de montage (50).

5. Monture d'articulation d'un dossier selon la revendication 1, **caractérisée en ce que** la pièce de montage (60) est un anneau, notamment un disque percé, qui repose par sa surface extérieure contre le trou de montage (50) et qui forme sur sa surface intérieure une partie de l'articulation réglable (106), notamment une denture interne (94).

6. Monture d'articulation d'un dossier selon la revendication 1, **caractérisée en ce que** l'un des bras (28, 30) comporte un flanc de butée (72) et que ce flanc de butée (72) et l'ergot d'arrêt (62) limite le mouvement de basculement vers l'avant du dossier (22) dans la position de basculement vers l'avant.

7. Monture d'articulation d'un dossier selon la revendication 1, **caractérisée en ce que** dans la découpe d'arrêt (52) se trouve aussi un levier de déclenchement (74) du mécanisme d'arrêt (61).

8. Monture d'articulation d'un dossier selon la revendication 1, **caractérisée en ce que** les deux bras (28, 30) et la pièce de montage (60) sont des pièces en tôle plates, notamment que le bras inférieur (28) est constitué de deux parties de bras (281, 282) plates qui reçoivent entre elles le bras supérieur (30).

9. Monture d'articulation d'un dossier selon la revendication 1, **caractérisée en ce que** l'articulation réglable (106) comporte un arbre d'entraînement et un engrenage et que l'arbre d'entraînement a un moyen de liaison (110) pour une liaison avec un moteur ou un moyen d'actionnement manuel, p. ex. une molette, un levier manuel.

10. Monture d'articulation d'un dossier selon la revendication 1, **caractérisée en ce que** l'articulation réglable (106) n'est disposée que sur un côté du siège et que le mécanisme d'arrêt (61) de l'articulation de basculement vers l'avant (48) n'est disposée que sur l'autre côté du siège, que l'axe de pivotement de l'articulation réglable (106) coïncide avec l'axe de basculement vers l'avant de l'articulation de basculement vers l'avant (48) et qu'il est prévu une liaison de rotation rigide qui est disposée entre les deux articulations (106) des deux côtés du siège.
